# EUROPEAN PATENT APPLICATION

(11) **EP 4 498 302 A1**
(43) Date of publication of application: **29.01.2025**
(21) Application number: 24190085.1
(22) Date of filing: 22.07.2024
(51) Int. Cl.: G06Q 10/06, G06Q 50/08, G06Q 50/16

(54) **ENVIRONMENTAL IMPACT EVALUATION INDEX CALCULATION SYSTEM AND METHOD FOR USING ENVIRONMENTAL IMPACT EVALUATION INDEX CALCULATION SYSTEM**

(30) Priority: 28.07.2023 JP 2023123216
(71) Applicant: Hitachi, Ltd., Tokyo 100-8280 (JP)
(72) Inventor: NAITO, Kenta, Tokyo, 100-8280 (JP); HASEGAWA, Hiroaki, Tokyo, 100-8280 (JP)
(74) Representative: MERH-IP Matias Erny Reichl Hoffmann Patentanwälte PartG mbB

(57) **Abstract**

An environmental impact evaluation index calculation system that determines, as an index, an environmental impact of a company on a social environment, the environmental impact evaluation index calculation system determining a CO2 emission storage amount from total CO2 emissions emitted from within a company facility, a total soil carbon amount and a carbon absorption capacity within the company facility estimated using a soil carbon cycle model, and a carbon absorption capacity in a downstream region within the company facility estimated using a river simulator, and setting the CO2 emission storage amount as a first environmental impact index.

## Description

### BACKGROUND OF THE INVENTION

### 1. Field of the Invention

The present invention relates to an environmental impact evaluation index calculation system and a method for using the environmental impact evaluation index calculation system.

### 2. Description of the Related Art

In CO2 emission management for environmental protection, current emission credits transactions calculate emissions by accumulating basic units across the entire supply chain from production to usage, and thus determine transaction amounts. Meanwhile, in recent years, in addition to carbon storage in soil, indexing of the impact of economic activities on the surrounding environment has been required as an index for biological diversity.

In this regard, JP 2022-153012 A proposes, for the purpose of providing a carbon storage agriculture evaluation system and a method for providing carbon storage agriculture evaluation information for visualizing carbon storage agriculture, "A carbon storage agriculture evaluation system, comprising: a data acquisition unit that reads, from a storage device, first data indicating a characteristic of a soil enhancement material containing bio-coal, second data including an application amount of the soil enhancement material containing the bio-coal applied to agricultural land, the type and surface area of the agricultural land, and the type and amount of applied fertilizer, and third data including the variety and the harvest amount of crops cultivated on the agricultural land; and a data processor that uses the first to third data acquired by the data acquisition unit to calculate one or both of a carbon storage amount and a greenhouse gas emission reduction amount of the agricultural land".

### SUMMARY OF THE INVENTION

JP 2022-153012 A discloses an invention that employs agriculture-related data to estimate carbon amounts and thus achieve the purpose of the invention. However, it is also seen that, among sources evaluated as being carbon neutral, a CO2 generation source, an absorption source, and the like, which were not evaluated in the production process or the like, are indicated again, and therefore an evaluation of the amount of CO2 emissions in terms of overall environmental impact is problematic. Furthermore, indexing the environmental load of water quality and soil in the surrounding environment is problematic.

In view of the foregoing, an object of the present invention is to provide an environmental impact evaluation index calculation system and a method for using the environmental impact evaluation index calculation system that make it possible to provide investors and the like with a composite index, which is determined by evaluating the environmental impact on the surroundings caused by CO2 emissions and economic activity and which takes into account an evaluation of the impact on the CO2 storage capacity of soil, which is caused by a change in the natural environment in various land use methods such as solar installations, biofuel production, resource mining, and building and house construction.

In view of the foregoing, the present invention provides "an environmental impact evaluation index calculation system that determines, as an index, an environmental impact of a company on a social environment, the environmental impact evaluation index calculation system determining a CO2 emission storage amount from total CO2 emissions emitted from within a company facility, a total soil carbon amount and a carbon absorption capacity within the company facility estimated using a soil carbon cycle model, and a carbon absorption capacity in a downstream region within the company facility estimated using a river simulator, and setting the CO2 emission storage amount as a first environmental impact index".

Further, the present invention provides "a method for using an environmental impact evaluation index calculation system that employs the environmental impact evaluation index calculation system, wherein the environmental impact index is presented to investors, and a company provides, to the environmental impact evaluation index calculation system, calculation basis data of total CO2 emissions emitted from within a company facility and data on soil within the company facility".

The present invention enables not only emissions, but also an absorption amount, to be used together, and also enables an environmental impact on the surroundings to be expressed as an index to facilitate an investment decision, thus enabling an evaluation of the overall environmental impact to be performed.

### BRIEF DESCRIPTION OF THE DRAWINGS

Fig. 1 is a diagram showing a configuration example of an environmental impact evaluation index calculation system according to an embodiment of the present invention;
Fig. 2 is a diagram illustrating a configuration example of a soil carbon cycle model 12M;
Fig. 3A is a diagram defining a plurality of states of underground organic matter;
Fig. 3B is a diagram illustrating the relationship between time and CO2 emissions;
Fig. 4 is a diagram to illustrate processing by a river simulator 14M;
Fig. 5 is a diagram to illustrate, using numerical values, a specific processing case to which the present invention is applied; and
Fig. 6 is a diagram illustrating the basic premise behind the present invention.

### DESCRIPTION OF THE PREFERRED EMBODIMENTS

Hereinafter, embodiments of the present invention will be described with reference to the drawings.

### First embodiment

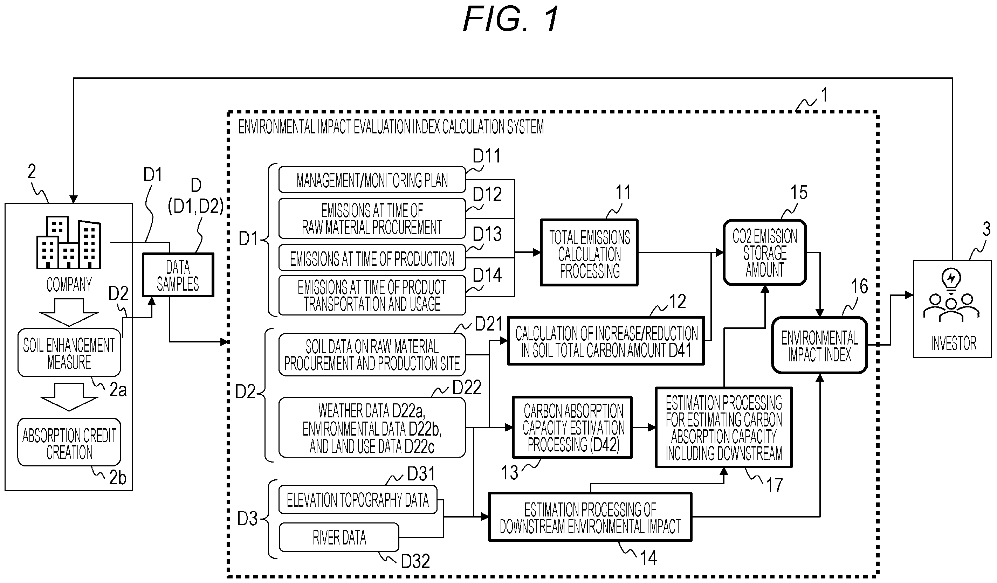

Fig. 1 is a diagram showing a configuration example of an environmental impact evaluation index calculation system according to an embodiment of the present invention. Here, before describing the configuration of the environmental impact evaluation index calculation system, a business model using the environmental impact evaluation index calculation system will be described.

Participants in this business model are a company 2 striving for environmental protection and an investor 3 investing in company 2 in support of the environmental protection activities of company 2, and, as a third party, an environmental impact evaluation index calculation system 1 that calculates and provides an environmental impact evaluation index enabling an accurate evaluation of the results and the current status of the environmental activities of company 2. Note that company 2 is not limited to being one company.

In order to implement an environmental enhancement cycle using the business model described above, first, company 2, which is striving for environmental protection, provides various data D to the environmental impact evaluation index calculation system 1 in an appropriate situation. The various types of data D include CO2 emissions data, raw material procurement data, and soil data of a production site. From the viewpoint of the data to be provided, it is desirable to provide a wide variety of data, such as data related to direct emissions of greenhouse gases by the business entity itself (fuel combustion, industrial processes), data related to indirect emissions associated with the use of electricity, heat, and steam supplied from other companies, and data related to indirect emissions other than the foregoing emissions (emissions by other companies related to activities of the companies).

These broadly provided data D are ascertained by being roughly divided into two types. One data type is basis data D1 for calculating the total CO2 emissions due to the activities of company 2, and the other type is measurement-related data D2 when company 2 executes a soil enhancement measure 2b or the like to improve the environment.

Specifically, the basis data D1 for calculating the total CO2 emissions is an environmental management/monitoring plan D11 of company 2, emissions D12 at the time of raw material procurement, emissions D13 at the time of production, emissions D14 at the time of product transportation and usage, and the like.

Further, the measurement-related data D2 when the soil enhancement measure 2b or the like is implemented includes soil data D21 on raw material procurement and the production site as the measurement data D2 of company 2, and in addition, the weather data D22a, the environmental data D22b, and the land use data D22c are determined as the regional data D22 for the region where the company is conducting business activities.

In the environmental impact evaluation index calculation system 1, in addition to the data D1 and D2 described above, elevation topography data D31 and river data D32 are inputted as map data D3. In the environmental impact evaluation index calculation system 1 of the present invention, because the impact on the environment is not limited to within the company facility and extends to the surroundings, map information is provided and an evaluation is performed to include the impact on a river downstream region in particular.

Using the various data D1, D2, and D3 described above, the environmental impact evaluation index calculation system 1 performs the following processing sequentially. Note that the environmental impact evaluation index calculation system 1 is implemented using a computer, and the main processing functions executed in an arithmetic unit of the computer are represented by blocks in Fig. 1.

First, the total emissions calculation processor 11 in the environmental impact evaluation index calculation system 1 calculates the total CO2 emissions within the company facility and an increase/decrease of the emissions. In this calculation, the environmental management/monitoring plan D11 of company 2, emissions D12 at the time of raw material procurement, emissions D13 at the time of production, and emissions D14 at the time of product transportation and usage, which are basis data D1 for calculating the total CO2 emissions, are used. Note that, here, instead of using a meter or the like to directly measure the CO2 in the air, the CO2 in the air may be determined by multiplying an "activity amount", which is used in economic statistics such as usage of gasoline, electricity, gas, and the like, by an "emission coefficient". The CO2 in the air can be determined as CO2 emissions = activity amount (production amount, usage amount, incineration amount, or the like) × emission coefficient.

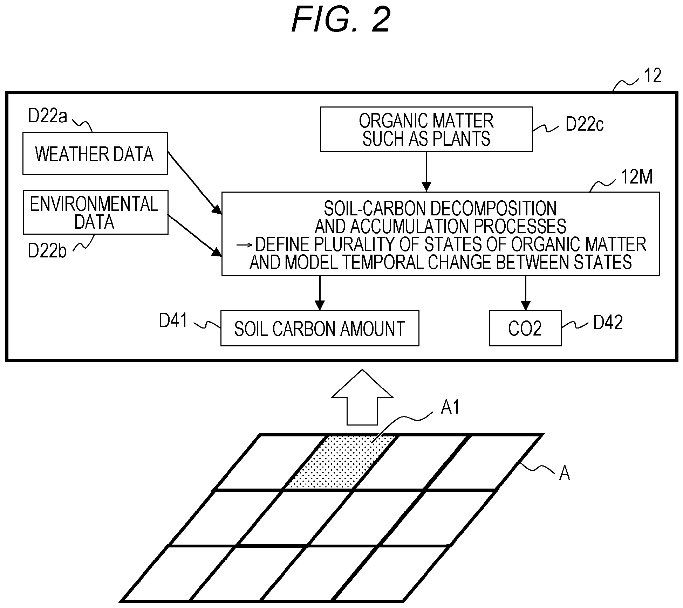

Next, a total soil carbon amount calculation unit 12 in the environmental impact evaluation index calculation system 1 calculates the total soil carbon amount in the target area and an increase or decrease of the total soil carbon amount. A carbon absorption capacity estimation processor 13 estimates the carbon absorption capacity of the target area. The target area here is assumed to be on site at company 2. Note that, in the processing by the total soil carbon amount calculation unit 12 and the carbon absorption capacity estimation processor 13, a soil carbon cycle model 12M in Fig. 2 is used. The soil carbon cycle model 12M is configured based on the RothC model.

In the soil carbon cycle model 12M of Fig. 2, the total soil carbon amount D41 and the CO2 emissions D42 are calculated for a sampling area A1, for example, of a region A managed by the company. In this model 12M, as the regional data D22 in the region, the weather data D22a, the environmental data D22b, and the land use data D22c are inputted, and the total soil carbon amount D41 and the CO2 emissions D42 are estimated. Here, modeling is performed for each area A1 divided into vegetation and soil features. The weather data D22a is a precipitation amount, a temperature, and humidity, and the environmental data corresponds to soil characteristics, vegetation data, and the like. The land use data D22c includes data on organic matter such as plants for each area.

Note that the soil carbon cycle model 12M, which is based on the RothC model, is obtained by defining a plurality of states of organic matter for soil-carbon decomposition and accumulation processes, and modeling temporal changes between the states.

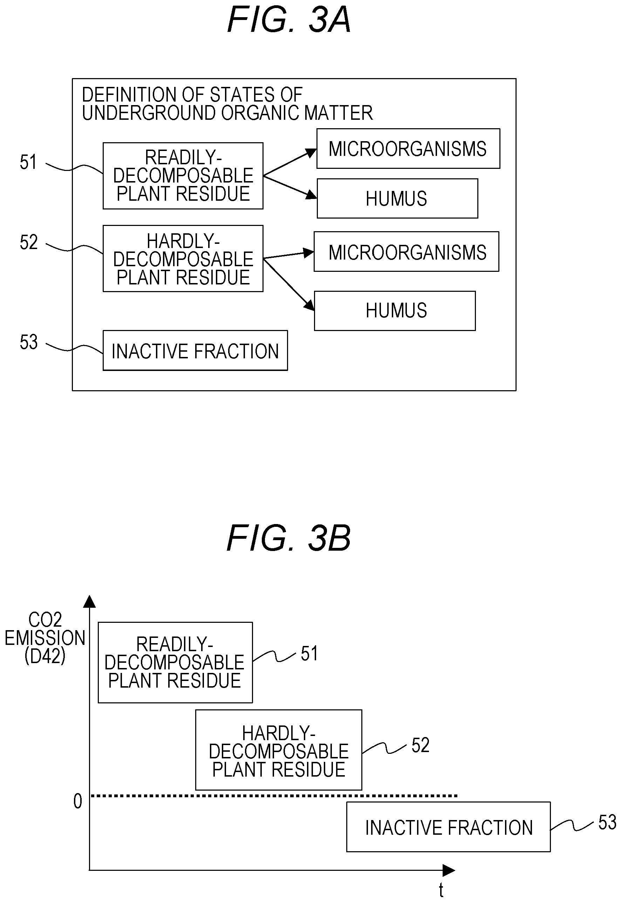

Fig. 3A defines a plurality of states of underground organic matter, and the underground organic matter are accordingly defined by being divided into a readily-decomposable plant residue 51 (composed of the total number of microorganisms and humus) in which decomposition proceeds relatively quickly, a hardly-decomposable plant residue 52 (composed of the total number of microorganisms and humus) in which decomposition proceeds relatively slowly, and an inactive fraction 53 in which decomposition barely advances. Note that the ratio of underground organic matter for each of the divided areas A is determined from soil measurement data.

In Fig. 3b, the horizontal axis represents time, and the vertical axis represents CO2 emissions. This drawing illustrates that the readily-decomposable plant residue 51, which decomposes quickly, is initially responsible for CO2 emissions, whereupon the hardly-decomposable plant residue 52, which decomposes slowly, is responsible for CO2 emissions, and that the inactive fraction 53 does not contribute to CO2 emissions. This decomposition means that CO2 emissions at an appropriate point in time in Fig. 3b are determined, and at the same time, means that the carbon absorption capacity in this area is determined chronologically by the carbon absorption capacity estimation processor 13 by using the soil carbon cycle model 12M.

Next, the estimation processor 14 of the environmental impact on the downstream region in the environmental impact evaluation index calculation system 1 uses the river simulator 14M to estimate the environmental impact on the downstream region of the target area. The river simulator 14M is configured based on a Sail & Water assessment tool (SWAT) model of a material circulation model in a target basin. Note that, in the SWAT model, a GIS interface is mounted, and dynamic processes such as water circulation, soil erosion, nutrient salt, agricultural chemicals, microorganisms, and the like in a water collection area are reproduced and predicted.

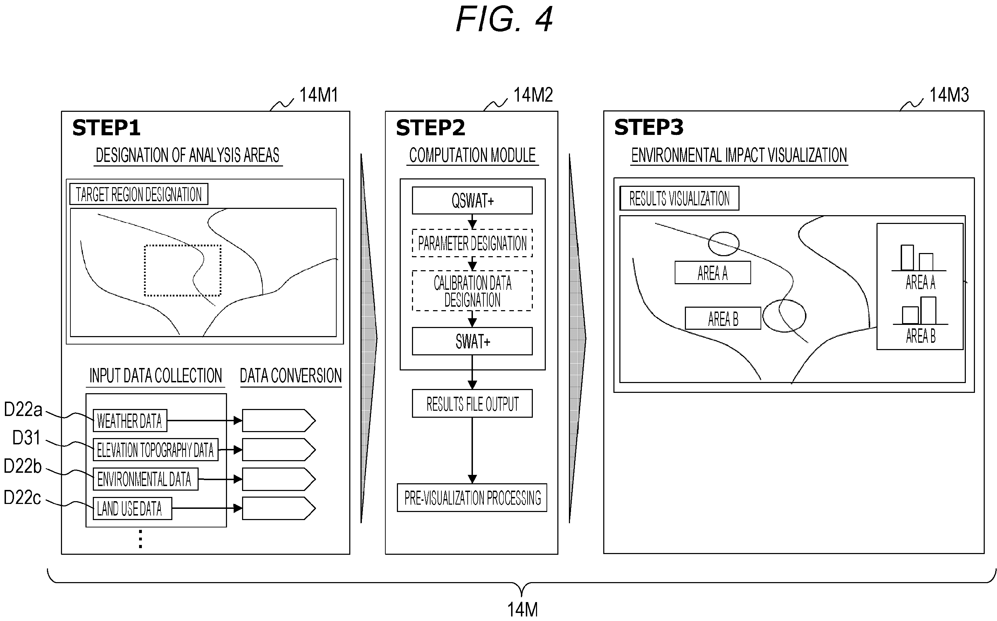

Fig. 4 is a diagram to illustrate processing by the river simulator 14M. The river simulator 14M executes processing in three stages. In a first stage 14M1 for preparatory purposes, a river region is designated which includes, as analysis areas, a company site and a downstream region of a surrounding river. Data necessary for analysis by the river simulator 14M is also acquired. These data are the weather data D22a, the environmental data D22b, the elevation topography data D31, and the land use data D22b. Among such data, the weather data D22a includes a precipitation amount, temperature, and humidity data, and the environmental data D22b corresponds to soil characteristics, vegetation data, and the like.

In a second stage 14M2, the river flow is modeled using the SWAT model using the elevation topography data D31, the river data D32, and the weather data D22a, and the circulation of matter is estimated based on the river flow and reactions in the soil. Although the description of the processing content of the SWAT model illustrated in the second stage 14M2 of Fig. 4 is omitted, in short, the impact of the soil environment on the site of the company on the surrounding area over time due to the impact of the surrounding river is estimated and calculated chronologically. In a third stage 14M3, the environmental impact is visualized to enable a time-series display on a map.

Returning to Fig. 1, the estimation processor 17 for estimating the carbon absorption capacity including the downstream region estimates how the carbon absorption capacities in the target area (on the company site) and the downstream region have been changed by the impact of the carbon absorption capacity on the company site by using the carbon absorption capacity at the company site as determined by the processing of the carbon absorption capacity estimation processor 13 and the estimation processing results of the environmental impact determined by the environmental impact estimation processor 14 on the downstream region.

Through the above processing, the CO2 emission storage amount calculation unit 15 in Fig. 1 determines the CO2 emission storage amount that has already been emitted as the sum of the output of the total emissions calculation processor 11 and the output of the total soil carbon amount calculation unit 12. The former output is the amount of CO2 emitted through business activities, and the latter output is the amount of CO2 emitted by the soil on the site. In contrast, the storage amount serving as the discharge reserve (scheduled for discharge in the near future) is determined from the output of the estimation processor 17 for estimating the carbon absorption capacity including the downstream region. Estimating the carbon absorption capacity means determining how much CO2 has accumulated without being discharged.

An environmental impact index calculation unit 16 (Fig. 1) acquires information such as the CO2 emissions and the reserve amount (storage amount) thereof from the CO2 emission storage amount calculation unit 15, and also the degree of impact, on the downstream region, of the environmental impact downstream of the estimation processor 14, and externally presents data corresponding to these pieces of information.

In response to this data, the investor 3 examines prospective investment recipients by referring to the environmental impact index of each company 2. On the other hand, on the basis of the results of estimating the environmental impact index for each area, the company 2 implements the soil enhancement measure 2a starting with highly effective areas. As a result, along with an increase in the environmental impact index due to the soil enhancement measure 2a, a cycle is created where the company 2 yields a profit from the investor 3 by creating absorption credits and an additional investment by improving the CO2 emission storage amount.

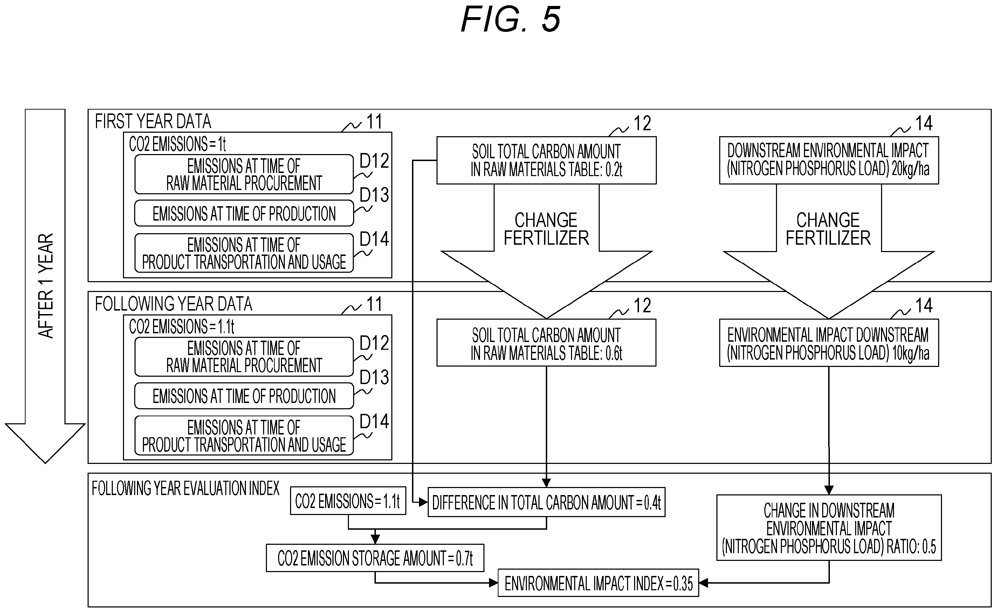

Next, a specific processing example to which the present invention is applied will be described using numerical values, and with reference to Fig. 5. First, Fig. 5 is presented in three stages, where an upper stage represents the first year, a middle stage represents the following year, and a lower stage represents an evaluation index for the following year. For the data of each year, the processing results of the total emissions calculation processor 11, the processing results of the total soil carbon amount calculation unit 12, and the environmental impact estimation processing results determined by the estimation processor 14 regarding the environmental impact on the downstream region are indicated by specific numerical values.

The case of a bread factory will now be described using the example of Fig. 5. In this bread factory, it was assumed that the CO2 emissions in the first year determined by the processing results of the total emissions calculation processor 11 was 1t, as illustrated in the upper stage. Furthermore, measuring the carbon amount of soil sampled in the target area at the time of raw material procurement yielded a result of 0.02 kg/m2. In a case where the surface area of the target area is 10,000 m2, the total carbon amount, which is the processing result of the total soil carbon amount calculation unit 12, is then 0.2t. The soil enhancement measure 2a was assumed to involve changing the land at the time of raw material procurement from chemical fertilizer to compost in order to increase the soil carbon amount.

In contrast, in the same bread factory, the CO2 emissions in the following year determined from the processing results by the total emissions calculation processor 11 were assumed to be 1.1t, as illustrated in the middle stage. In addition, measuring the carbon amount of soil sampled in the land at the time of raw material procurement yielded a result of 0.06 kg/m2. In a case where the surface area of the target area is 10,000 m2, the total carbon amount is then 0.6t.

At this time, when the difference in total carbon amount between the first year and the following year is calculated, the following year evaluation index in the lower stage is then 0.4t. In addition, the difference between the CO2 emissions in the first year and the CO2 emissions in the following year is 1.1t -0.4t = 0.7t, which is taken as the CO2 emission storage amount in the present environmental impact evaluation index calculation system including the absorption amount.

Furthermore, due to the effect of changing the target area from chemical fertilizer to compost in order to increase the soil carbon amount at the time of raw material procurement, the environmental impact on the downstream region (nitrogen phosphorus load) determined by the estimation processor 14 for the environmental impact on the downstream region was reduced from 20 kg/ha to 10 kg/ha. Therefore, the rate of change from the first year to the following year is 0.5. Finally, by multiplying the difference 0.7t of the CO2 emissions by the rate of change 0.5 from the first year to the following year of the environmental impact, the environmental impact index is then 0.35.

Next, although not illustrated, a case of construction of a new factory for the same bread factory as in Fig. 5 will be described. In this case, when the carbon amount was measured from a soil sample D21 at the scheduled construction site by using the combustion oxidation method, and the total carbon amount D41 of the scheduled construction site was estimated from the topography and vegetation data, taking into account the fact that the total carbon amount D41 was 0.5t and that the pavement area of the factory construction site was 80%, the carbon absorption loss D42 was 0.4t.

In addition, the energy of the factory utilizes gas and system power, and the amount of emission of the factory was 1t in the light of the basic units determined from the processing results of the total emissions calculation processor 11, and the CO2 emission storage amount determined by the CO2 emission storage amount calculation unit 15 including the carbon absorption loss D42 was evaluated as 1.4t.

In contrast, the environmental impact (nitrogen phosphorus load) on the downstream region before the factory construction determined by the estimation processor 14 of the environmental impact on the downstream region was 10 kg/ha, and the environmental impact (nitrogen phosphorus load) on the downstream region after the construction was 30 kg/ha. In this case, the rate of change in environmental impact on the downstream region is 3.

In this case, the environmental impact index determined by the environmental impact index calculation unit 16 is 1.4 (CO2 emission storage amount) × 3 (rate of change in environmental impact on the lower region) = 4.2, and the environmental impact index is evaluated as 4.2.

Furthermore, although not illustrated, a case where solar power construction is performed for the same bread factory as in Fig. 5 will be described. In this case, the carbon amount was measured from a soil sample at the scheduled construction site by using the combustion oxidation method, and the total carbon amount D41 of the scheduled construction site was estimated from the topography and vegetation data. As a result, the total carbon amount D41 was 0.2t.

When the soil sample was re-measured one year after the solar installation and the start of power generation (carbon neutral), the total carbon amount was 0.18t, and when the soil sample was re-measured 2 years after the start of power generation, the total carbon amount was 0.16t. At this time, the CO2 emission storage amount was re-evaluated as 0.02t after one year and 0.04 after 2 years.

In contrast, it was assumed that the environmental impact (nitrogen phosphorus load) on the downstream region before the solar installation, which was determined by the estimation processor 14, on the downstream region was 10 kg/ha, the environmental impact (nitrogen phosphorus load) on the downstream region one year after the solar installation was 14 kg/ha, and the environmental impact (nitrogen phosphorus load) on the downstream region after two years was 20 kg/ha. In this case, the rate of change in environmental impact on the downstream region was 1.4 after one year and 2 after two years.

In this case, the environmental impact index determined by the environmental impact index calculation unit 16 was evaluated such that the environmental impact index after one year was 0.028 and the environmental impact index after two years was 0.08.

The above-described embodiment of the present invention enables not only emissions, but also an absorption amount, to be used together, and also enables the environmental impact on the surroundings to be expressed as an index to facilitate an investment decision, thus enabling an evaluation of the overall environmental impact to be performed.

### Second Embodiment

The first embodiment presents the present invention with a focus on the data to be handled and the processing functions, whereas the second embodiment presents the basic premise behind the present invention.

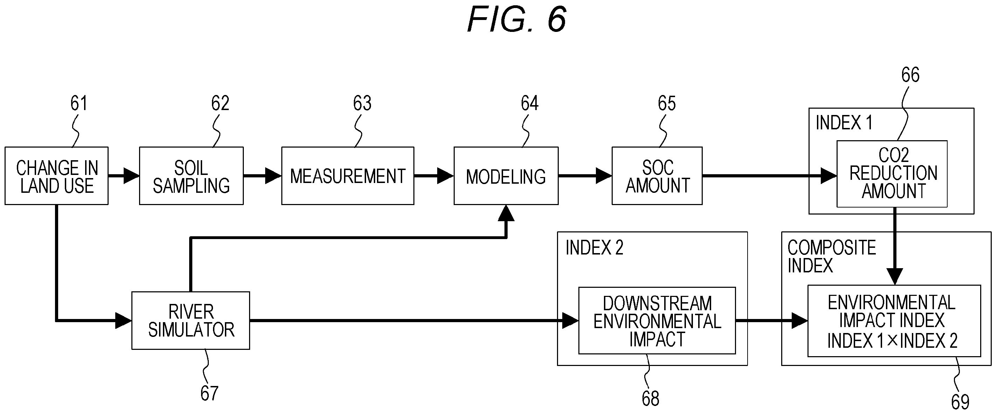

Fig. 6 is a diagram illustrating the basic premise behind the present invention. Here, as a premise, changes in land use 61 occur in a target area such as a company site, and soil sampling 62 and measurement 63 are performed. Note that, as described in the case of the first embodiment, changes in land use 61 are the soil enhancement measure 2a, a fertilizer change, new factory construction, and solar power construction.

In the present invention, estimation using two types of models (hereinafter, referred to as models including a simulator) is performed for the changes in land use 61. The first model 64 estimates the carbon emission storage amount, and although, conventionally, only the carbon emission storage amount in the target area is estimated, in the present invention, the carbon emission storage amount in the area including the downstream area of the river is estimated. That is, for a target area such as a company site which is a soil nutrient source, the model application range is set to include a downstream region thereof. According to the first model 64, calculation can be performed including an SOC amount 65 including the downstream region, and upon receipt of the result, the CO2 reduction amount 66 is set as an index 1.

A second model of the present invention involves applying a river simulator 67 to calculate, along the river, soil nutrient sources including flow rate, nitrogen, and phosphorus. This estimation result is used as an index 2 for the environmental impact 62 on the downstream region.

Finally, a composite index, which is the product of index 1 and index 2, is defined as an environmental impact index.

The basic premise behind the second embodiment will be summarized as follows. First, the evaluation area covers not only the area of activity but also the downstream region affected by the area of activity. By adding a river simulator at this time, not only the SOC amount in the area of activity is ascertained, but also the distribution of nitrogen and phosphorus in the downstream region is checked to obtain an environmental evaluation index. The environmental evaluation index is a composite evaluation index in which CO2 emissions and a downstream environmental impact are combined in a composite manner.

## Claims

1. An environmental impact evaluation index calculation system that determines, as an index, an environmental impact of a company on a social environment, the environmental impact evaluation index calculation system determining a CO2 emission storage amount from total CO2 emissions emitted from within a company facility, a total soil carbon amount and a carbon absorption capacity within the company facility estimated using a soil carbon cycle model, and a carbon absorption capacity in a downstream region within the company facility estimated using a river simulator, and setting the CO2 emission storage amount as a first environmental impact index.

2. The environmental impact evaluation index calculation system according to claim 1, wherein the river simulator estimates, calculates and quantifies the impact, on the surrounding region via a river, of the soil environment within the company facility, and sets the impact as a second environmental impact index.

3. The environmental impact evaluation index calculation system according to claim 2, wherein a third environmental impact index from a first environmental impact index and a second environmental impact index is obtained.

4. The environmental impact evaluation index calculation system according to claim 1, wherein the total CO2 emissions emitted from within the company facility are determined from an environmental management/monitoring plan of the company, emissions at a time of raw material procurement, emissions at a time of production, and emissions at a time of product transportation and usage.

5. The environmental impact evaluation index calculation system according to claim 1, wherein the soil carbon cycle model is obtained by defining a plurality of states of organic matter for soil-carbon decomposition and accumulation processes, and modeling temporal changes between the states.

6. A method for using an environmental impact evaluation index calculation system that employs the environmental impact evaluation index calculation system according to any one of claims 1 to 5, wherein
the environmental impact index is presented to investors, and
the company provides, to the environmental impact evaluation index calculation system, calculation basis data of total CO2 emissions emitted from within a company facility and data on soil within the company facility.
